(19) Europäisches Patentamt / European Patent Office / Office européen des brevets

(11) **EP 2 725 748 A2**

(12) **EUROPEAN PATENT APPLICATION**

(43) Date of publication:
    **30.04.2014  Bulletin 2014/18**

(51) Int Cl.:
    *H04L 12/403* (2006.01)   *G05B 19/00* (2006.01)
    *G05B 23/02* (2006.01)    *H04J 3/16* (2006.01)
    *H04L 12/413* (2006.01)   *H04L 29/08* (2006.01)
    *H04L 12/26* (2006.01)    *H04W 4/00* (2009.01)

(21) Application number: **13185523.1**

(22) Date of filing: **23.09.2013**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority:  **23.10.2012  JP 2012234200**

(71) Applicant: **OMRON CORPORATION
    Kyoto-shi,  Kyoto 600-8530 (JP)**

(72) Inventors:
    • **Iguchi, Koji
      Kyoto-shi, Kyoto 600-8530 (JP)**

    • **Kawai, Takuma
      Kyoto-shi, Kyoto 600-8530 (JP)**
    • **Ikumo, Masahiro
      Kyoto-shi, Kyoto 600-8530 (JP)**
    • **Yoneda, Mitsuhiro
      Kyoto-shi, Kyoto 600-8530 (JP)**
    • **Nosaka, Tetsuya
      Kyoto-shi, Kyoto 600-8530 (JP)**
    • **Ozaki, Koyo
      Kyoto-shi, Kyoto 600-8530 (JP)**
    • **Kishiba, Hideyuki
      Kyoto-shi, Kyoto 600-8530 (JP)**

(74) Representative: **Horn Kleimann Waitzhofer
    Ganghoferstrasse 29a
    80339 München (DE)**

(54) **Sensor system and communication device**

(57)    In order to control the increase in a transmission time of a signal associated with addition of a sensor, provided is a photoelectric sensor system (1) which includes a communication unit (10) connected to a PLC (2); and a plurality of distributed units (20A, 20B) connected to the communication unit (10), wherein sensors (30) are connected to the plurality of distributed units (20A, 20B); the plurality of distributed units (20A, 20B) are connected to the communication unit (10) in a bus type arrangement; the distributed unit (20A) transmits signals from sensors (30G-30I) to the communication unit (10); the communication unit (10) transmits the signal from the distributed unit (20A) to the PLC (2); the distributed unit (20B) transmits signals from sensors (30J-30N) to the communication unit (10); and the communication unit (10) transmits the signals from the distributed unit (20B) to the PLC (2).

FIG. 1

## Description

BACKGROUND OF THE INVENTION

TECHNICAL FIELD

The present invention relates to a sensor system and a communication device, and in particular, relates to a technology for arranging a plurality of sensors in a distributed manner.

RELATED ART

In general, a production line has a plurality of sensors provided therein. A PLC (Programmable Logic Controller) as a control device controls a manufacturing machine in response to signals input from various sensors. In such a manufacturing system, input systems from the sensors need to be unified in order to simplify the system configuration.

To satisfy this need, Japanese Patent 4294985 B1 discloses a technology in which sensor units and sensor relay units are connected to a master unit, and the input systems from the sensors to the control device are unified by the master unit. Japanese Patent 3852067 B1 discloses a communication system which includes a master unit and a plurality of slave units which are cascade-connected to the master unit.

However, in JP 4294985 B1 and JP 3852067 B1, the sensor relay units or the slave units are connected to each other in series, thus, in order to transmit the detection result of, for example, the sensor on the lowest layer to the master unit, many units perform relaying process of a signal. As a result, it can take time to transmit the signal from the sensor to the master unit.

SUMMARY

The present invention has been made in view of the above-mentioned problem, and an object of the present invention is to control the increase in a transmission time associated with additional installation of a sensor.

In one embodiment, a sensor system includes a master communication device connectable (e.g. physically and electrically) to a control device and a plurality of sensors, the master communication device being configured to store information received from each sensor in a memory and send the stored information to the control device; and a plurality of slave communication devices connectable (e.g. physically and electrically) to a plurality of sensors, each of the slave communication devices configured to store information received from the respective sensors in a memory and send the stored information to the master communication device. The plurality of slave communication devices are connected to the master communication device in a bus type arrangement. For example, the plurality of slave communication devices and the master communication device may each be connected to a system bus. A sensor discrimination signal and detected information of the sensors are transmitted between each slave communication device and the sensors. The sensor discrimination signals and the detected information are transmitted between the master communication device and the each slave communication device. The sensor discrimination signal and the detected information are transmitted between the control device and the master communication device.

With this configuration, a sensor can be additionally installed in the sensor system by additionally installing the slave communication device. Since the plurality of the slave communication devices are connected to the master communication device in a bus type arrangement, even when the slave communication device is additionally installed, communication between the master communication device and the additionally installed slave communication device can be established without the existing slave communication device relaying the communication. Therefore, a transmission time of the signal associated with the additional installation of a sensor can be prevented from increasing.

The plurality of slave communication devices may be connected to the master communication device by a serial transmission line. The master communication device and each of the slave communication devices may be connected to one or more sensors by a serial transmission line and a parallel transmission line. Each of the slave communication devices may be connected to one or more sensors by a serial transmission line or a parallel transmission line.

The master communication device may periodically check whether the slave communication device is activated, and communicate with the slave communication device which is activated. In this case, as a way of checking, an activation-checking communication command may be periodically sent to the slave communication devices, and an identification of a slave communication device which is activated may be stored. The activation-checking communication command is a command for checking whether the slave communication device is activated, and the activation-checking communication command includes an instruction for making the slave communication device to send back a predetermined signal. Therefore, the slave communication device sends back the predetermined signal when receiving the activation-checking communication command.

By periodically checking whether the slave communication device is activated, the master communication device can identify not only the slave communication device activated earlier than the master communication device but also the slave communication device activated later than the master communication device, and can carry out communication.

Upon receiving a command from the master communication device, each of the slave communication devices may send a signal to the master communication device in an order previously registered at the slave communication device. In this case, the master communication device may send a synchronization signal to the slave communication devices. The signal sending section may send the signal to the master communication device after a lapse of a waiting time calculated based on the order previously registered at the slave communication device.

Since the slave communication device sends back the signal in order at different times, the signals can be efficiently sent to the master communication device from the plurality of slave communication devices connected in parallel to each other.

In another embodiment, a communication device is (e.g. physically and electrically) connectable to a control device and a plurality of sensors, configured to store information received from each sensor in a memory and to send the information stored in the memory to the control device. The communication device includes a first communication unit configured to communicate with the sensors; a second communication unit configured to communicate with the control device; and a third communication unit configured to communicate with a plurality of slave communication units, the plurality of slave communication units physically and electrically connected to a plurality of sensors which are different from the sensors connected to the communication device, each of the slave communication units storing information received from each sensor in a memory and sending the information stored in the memory to the communication device, and being connected to the communication device in a bus type arrangement.

With this configuration, a sensor can be additionally installed by additionally installing the slave communication device. Since the plurality of the slave communication devices are connected to the master communication device in a bus type arrangement, even if a slave communication device is additionally installed, communication between the master communication device and the additionally installed slave communication device can be established without the existing slave communication device relaying the communication. Therefore, a transmission time of the signal associated with the additional installation of a sensor can be prevented from increasing.

A sensor can be additionally installed by additionally installing the slave communication device. Since the plurality of the slave communication devices are connected to the master communication device in a bus type arrangement, even when the slave communication device is additionally installed, communication between the master communication device and the additionally installed slave communication device can be established without the existing slave communication device relaying the communication. Therefore, an increase in a transmission time of the signal associated with the additional installation of a sensor can be prevented from increasing.

BRIEF DESCRIPTION OF THE DRAWINGS

Fig. 1 is a schematic diagram showing a photoelectric sensor system;
Fig. 2 is a perspective view showing an appearance of a communication unit;
Fig. 3 is a functional block diagram of the communication unit;
Fig. 4 is a perspective view showing an appearance of a distributed unit;
Fig. 5 is a functional block diagram of the distributed unit;
Fig. 6 is a perspective view showing a sensor;
Fig. 7 is a first flowchart showing a process performed by the communication unit;
Fig. 8 is a second flowchart showing a process performed by the communication unit;
Fig. 9 is a fist timing chart showing a synchronization signal from the communication unit and a reply signal from the distributed unit; and
Fig. 10 is a second timing chart showing a synchronization signal from the communication unit and a reply signal from the distributed unit.

DETAILED DESCRIPTION

An embodiment of the present invention is described below with reference to the drawings. In the following description, the same reference numeral is assigned to the same component. The component having the same reference numeral has the same name and function. Therefore, the description thereof is not repeated in details.

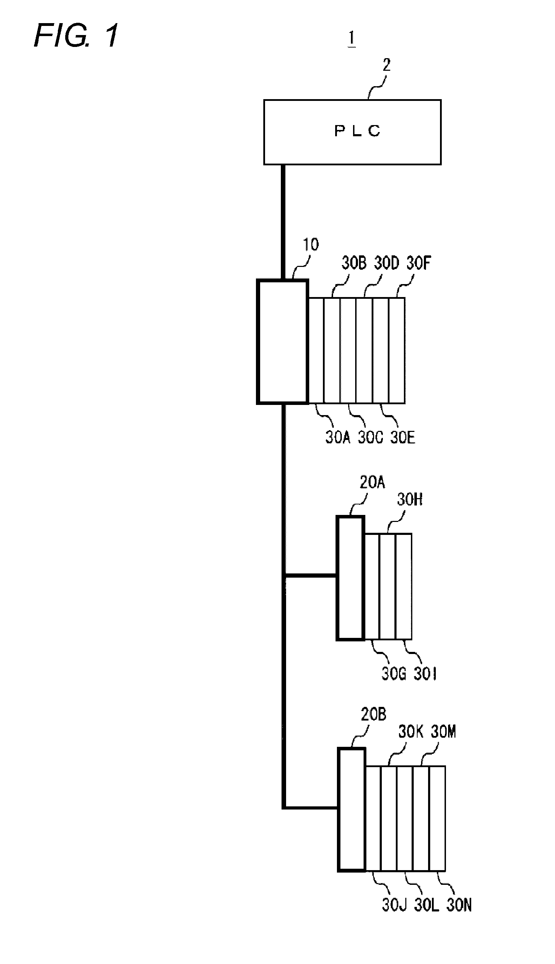

With reference to Fig. 1, a photoelectric sensor system 1 will be described as an example of a sensor system. However, a sensor system other than a photoelectric sensor system may be used. The photoelectric sensor system 1 includes a communication unit 10, a plurality of distributed units 20 (20A, 20B), and a plurality of sensors 30 (30A-30N).

The communication unit 10 is connected to a PLC 2 through a network such as a LAN (Local Area Network). As an example, the communication unit 10 is configured to communicate with the PLC 2 by using EtherCAT (registered trademark), CC-LINK (registered trademark), DeviceNET, and CompoNET, and the like.

The distributed units 20A and 20B are connected to the communication unit 10 in parallel to each other. In other words, the distributed units 20A and 20B are connected to the communication unit 10 in a bus type arrangement. In this embodiment, the two distributed units 20A and 20B are used, but the number of the distributed units is not limited to two, and a plurality of distributed units may be used.

In this embodiment, the distributed units 20A and 20B are configured to communicate with the communication unit 10 in serial communication. That is to say, the distributed units 20A and 20B are each physically connected to the communication unit 10 through a serial transmission line. Parallel communication may be used instead of or in addition to the serial communication. In other words, the distributed units 20A and 20B may be each physically connected to the communication unit 10 through a parallel transmission line.

In this embodiment, the communication unit 10 has a function of a master unit, and the distributed units 20A and 20B each have a function of a slave unit. Therefore, when the communication unit 10 is activated, the communication unit 10 checks whether the distributed units 20A and 20B each are activated. Further, in this embodiment, even if the distributed units are activated after the activation of the communication unit 10, the communication unit 10 periodically checks, in order to detect the activation of the distributed units, whether the distributed units 20A and 20B each are activated.

To each of the communication unit 10 and the distributed units 20A and 20B is connected different sensors 30. That is to say, the sensors 30A-30N are provided to the photoelectric sensor system 1 in a distributed manner. As an example, in this embodiment, the sensors 30A-30F are connected physically and electrically to the communication unit 10. The sensors 30G-30I are connected physically and electrically to the distributed unit 20A. The sensor sensors 30J-30N are connected physically and electrically to the distributed unit 20B. It should be noted that the total number of the sensors 30 and the numbers of the sensors 30 connected to each of the communication unit 10 and the distributed units 20 are not limited to those numbers shown in Fig. 1. For example, no sensor may be connected to the communication unit 10.

In this embodiment , the communication unit 10 stores information received from each of the sensors 30A-30F in a memory and sends the stored information to the PLC 2. The distributed unit 20A stores information received from each of the sensors 30G-30I in a memory and sends the stored information to the communication unit 10, and the communication unit 10 transmits the signal from the distributed unit 20A to the PLC 2. The distributed unit 20B stores information received from each of the sensors 30J-30N in a memory and sends the stored information to the communication unit 10, and the communication unit 10 transmits the signal from the distributed unit 20B to the PLC 2. As a result, the signals from the sensors 30A-30N are unified and transmitted to the PLC 2 by the communication unit 10.

For example, between the communication unit 10 and each sensor 30, a sensor discrimination signal and detected information of each sensor 30 are transmitted. The sensor discrimination signal is an ON signal or an OFF signal for indicating whether a sensor 30 is active or inactive. For example, when a sensor 30 is active, the sensor discrimination signal thereof indicates ON. To the contrary, when a sensor 30 is inactive, the sensor discrimination signal indicates OFF. In this embodiment using the photoelectric system, the detected information of a sensor 30 is, for example, a received light amount, a threshold value, and the like.

In a similar way, between each distributed unit 20 and each sensor 30, the sensor discrimination signal and the detected information of each sensor 30 are transmitted. Further, between the communication unit 10 and each distributed unit 20, the sensor discrimination signal and the detected information of each sensor 30 are transmitted. Further, between the PLC 2 and the communication unit 10, the sensor discrimination signal and the detected information of each sensor 30 are transmitted.

When a signal is transmitted from the communication unit 10 to one of the distributed units 20, the one of the distributed units 20 directly receives the signal from the communication unit 10 without other distributed unit. That is, when the distributed unit 20A receives a signal from the communication unit 10, the distributed unit 20B does not perform processing to the signal. In the same way, when the distributed unit 20B receives a signal from the communication unit 10, the distributed unit 20A does not perform processing to the signal.

It should be noted that an embodiment in which each distributed unit 20 and the communication unit 10 communicate directly to each other includes an embodiment in which, while a communication line connecting one of the distributed units and the communication unit 10 physically passes through another one of the distributed units, the another one of the distributed units does not perform processing to the communication between the one of the distributed units and the communication unit 10. That is to say, an embodiment in which, while a communication line connecting one of the distributed units and the communication unit 10 physically passes through another one of the distributed units, the another one of the distributed units does not perform processing to the communication between the one of the distributed units and the communication unit 10 is one of embodiments in which the distributed units 20 are connected in parallel (connected in a bus type arrangement) to the communication unit 10.

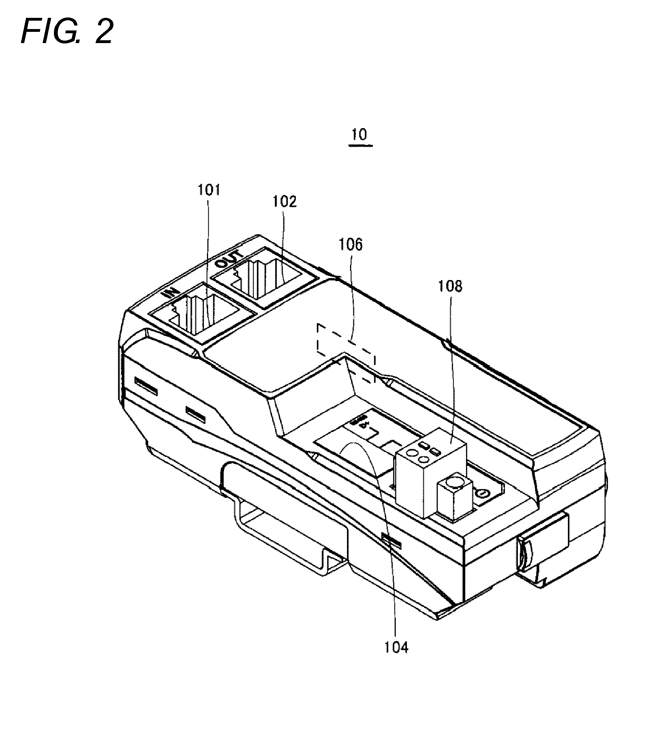

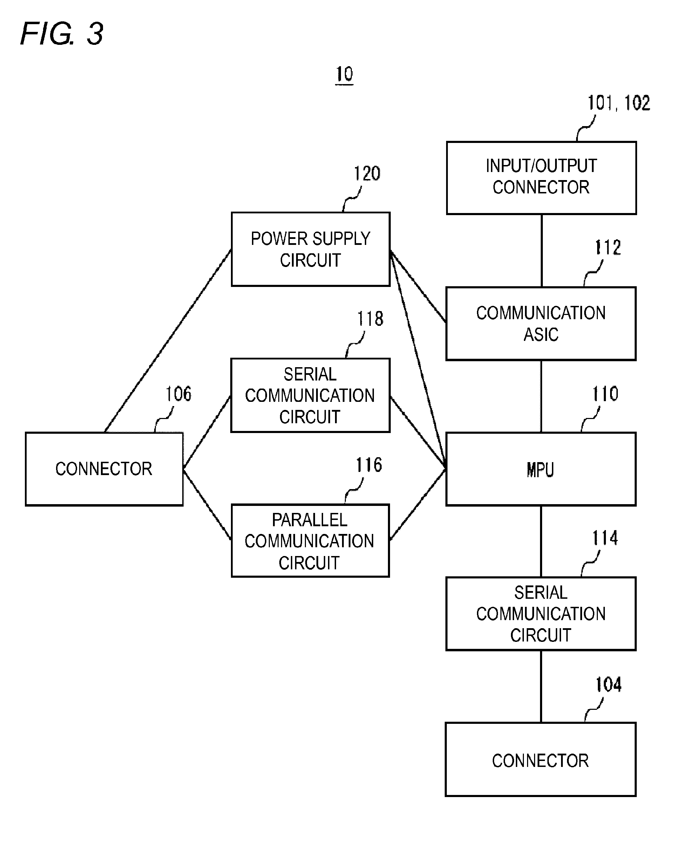

With reference to Figs. 2 and 3, the communication unit 10 will be further described. As shown in Fig. 2, the communication unit 10 includes an input connector 101 and an output connector 102 used for connection to the PLC 2, a connector 104 used for connection to the distributed unit 20, a connector 106 used for connection to the sensor 30, and a power input connector 108.

As shown in Fig. 3, the communication unit 10 further includes an MPU (Micro Processing Unit) 110, a communication ASIC (Application Specific Integrated Circuit) 112, a serial communication circuit 114, a parallel communication circuit 116, a serial communication circuit 118, and a power supply circuit 120.

The MPU 110 operates to integrally perform all processing on the communication unit 10. The communication ASIC 112 manages communication with the PLC 2. As described above, the communication unit 10 communicates with the PLC2 by using EtherCAT, CC-LINK, DeviceNET, CompoNET, and the like.

On the other hand, the communication unit 10 and the distributed units 20A and 20B are connected to each other in a bus type arrangement. For the communication between the communication unit 10 and the distributed units 20, serial communication is used. Here, parallel communication may be used. For the communication between the communication unit 10 and the distributed unit 20, for example, two communication lines are used, one for transmitting and the other for receiving.

The sensor 30 is mounted on, for example, a side surface of the communication unit 10. For the communication between the communication unit 10 and the sensor 30, parallel communication or serial communication is used. In other words, the communication unit 10 and the sensor 30 are physically connected to each other through a serial transmission line and a parallel transmission line. It should be noted that the communication unit 10 and the sensor 30 may be connected through one of a serial transmission line and a parallel transmission line.

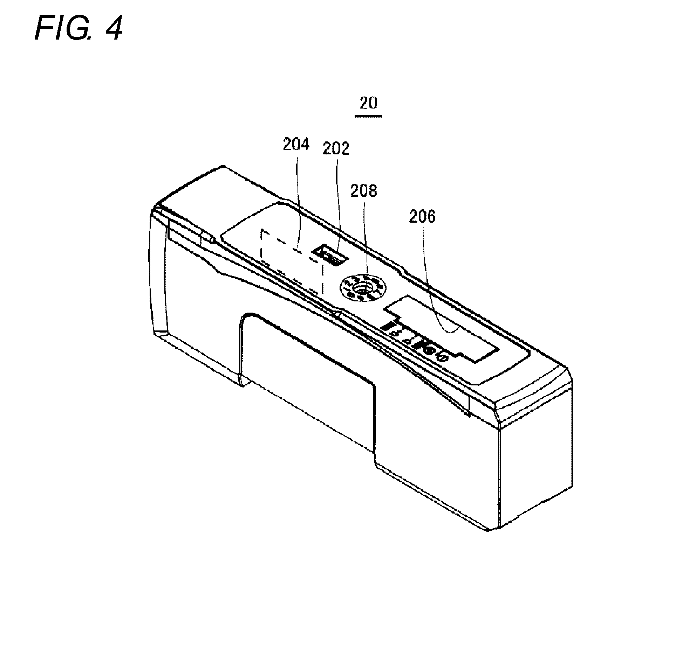

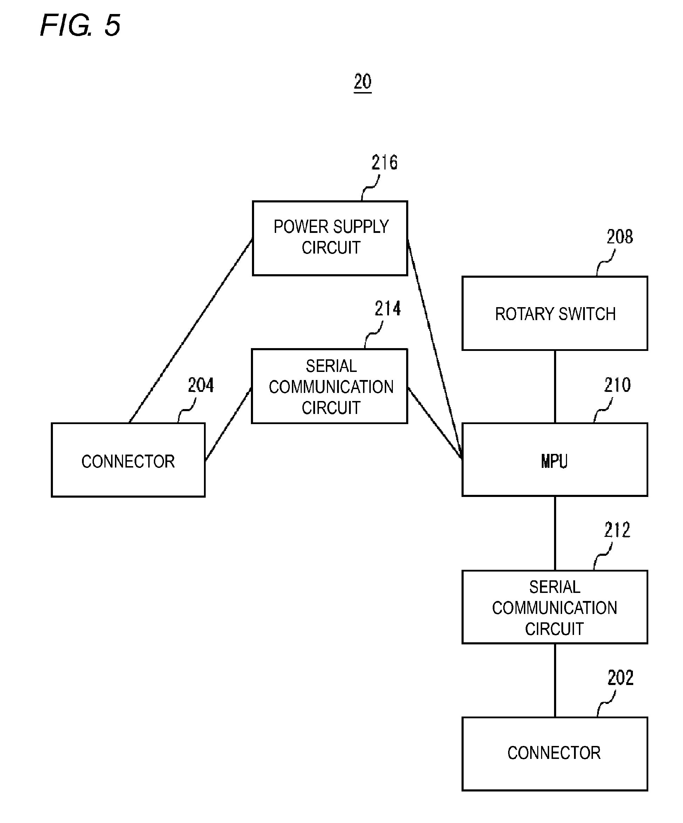

With reference to Figs. 4 and 5, the distributed unit 20 will be further described. As shown in Fig. 4, the distributed unit 20 includes a connector 202 used for connection to the communication unit 10, a connector 204 used for connection to the sensor 30, a power input connector 206, and a rotary switch 208.

As shown in Fig. 5, the distributed unit 20 further includes an MPU 210, a serial communication circuit 212 for communication with the communication unit 10, a serial communication circuit 214 for communication with the sensor 30, and a power supply circuit 216.

The MPU 210 operates to integrally perform all processing on the distributed unit 20. As described above, the communication unit 10 and the distributed unit 20 are connected to each other in a bus type arrangement, and serial communication is used.

The sensor 30 is mounted on, for example, a side surface of the distributed unit 20. For the communication between the distributed unit 20 and the sensor 30, serial communication is used, but parallel communication may be used. On the other hand, the distributed unit 20 and the sensor 30 are physically connected to each other through at least one of a serial transmission line and a parallel transmission line. The distributed unit 20 and the sensor 30 may be connected through a serial transmission line and a parallel transmission line.

In this embodiment, since the plurality of the distributed units 20 are provided in the photoelectric sensor system 1, for the communication unit 10 to communicate with each distributed unit 20 separately, an identification number of each distributed unit 20 needs to be identified. For this purpose, a user can set the identification number for each distributed unit 20 by using the rotary switch 208. The communication unit 10 can identify the distributed unit 20 of the transmission source of the received data, on the basis of the identification number included in the received data. In addition, if data to be transmitted from the communication unit 10 is configured to have an identification number, a command can be given to a desired distributed unit 20.

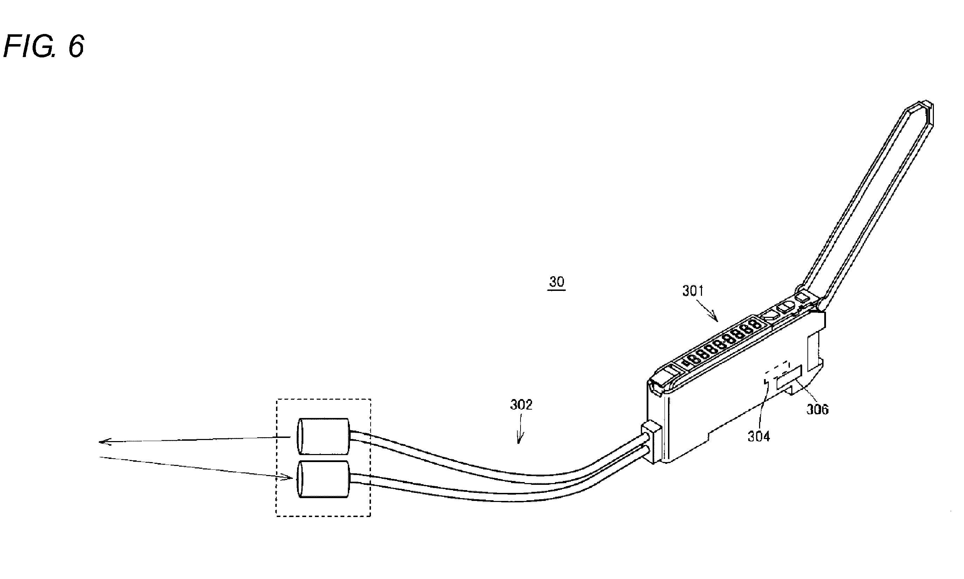

With reference to Fig. 6, the sensor 30 is further described. The sensor 30 includes an amplifier unit 301 and a fiber unit 302. The amplifier unit 301 includes an openable cover rotatably fixed to a body case of the amplifier unit 301 and a frame contained in the body case. The amplifier unit 301 includes a display and an operation unit on the upper surface of the frame which is exposed when the openable cover is open.

On the both sidewalls of the amplifier unit 301, connector 304 and 306 are provided for connection to the communication unit 10, the distributed unit 20, or another amplifier unit 301. Thus, the plurality of the amplifier units 301 can be serially connected to the communication unit 10 or the distributed unit 20. As a result, a signal from one amplifier unit 301 which is connected to another amplifier unit 301 is transmitted to the communication unit 10 or the distributed unit 20 through the another amplifier unit 301.

The fiber unit 302 is connected to the front wall of the amplifier unit 301. The fiber unit 302 includes a head, a projecting-side optical fiber, and a receiving-side optical fiber.

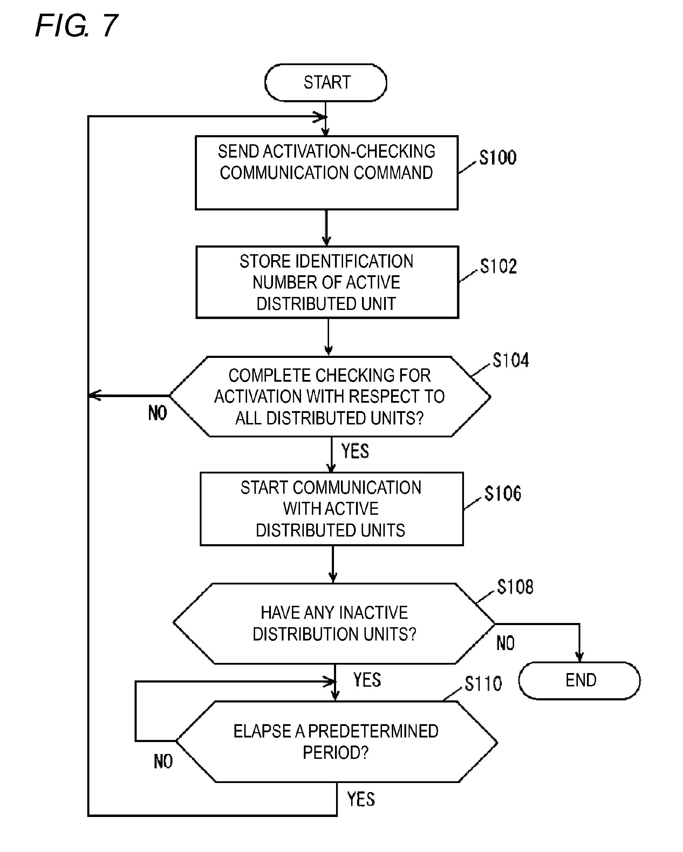

With reference to Fig. 7, a description is made on a process performed by the communication unit 10 to check whether the distributed unit 20 is active according to the embodiment.

When the communication unit 10 is activated, an activation-checking communication command is sent to the distributed unit 20 at Step (hereinafter, abbreviated as S) 100. The activation-checking communication command is sequentially sent to each distributed unit 20. It should be noted that the number of the distributed unit 20 included in the photoelectric sensor system 1 and their identification numbers are previously registered at the communication unit 10 or the PLC 2 by using a personal computer and the like.

In this embodiment, the distributed unit 20 is configured to send back the identification number to the communication unit 10 upon receiving the activation-checking communication command from the communication unit 10. Thus, the communication unit 10 can identify an active distributed unit 20 from the identification number received after sending the activation-checking communication command.

Then, at S102, the communication unit 10 stores, as the identification number of the active distributed unit 20, the identification number of the distributed unit 20 which has sent back the identification number. Upon completion of checking for activation with respect to all the distributed units 20 (S104: YES), the communication unit 10 starts communication with the active distributed units 20 at S106.

When there is an inactive distributed unit 20 (S108: YES), the activation-checking communication command is sent again at S100 after a lapse of a predetermined period (S110: YES). On the other hand, when all the distributed unit 20 are activated (S108: NO), this process ends.

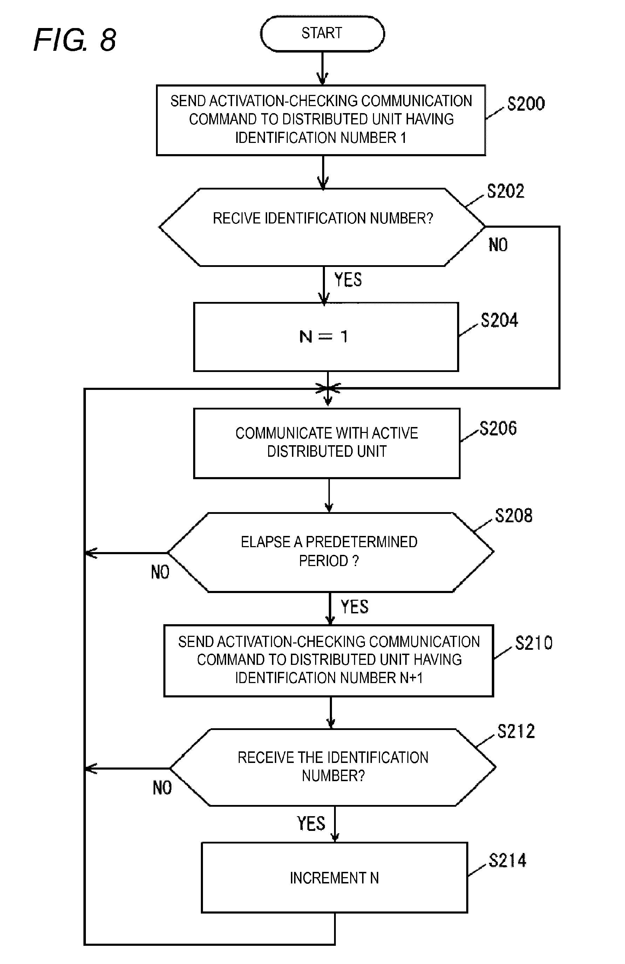

Instead of the process shown in Fig. 7, the process may be performed which is described below with reference to Fig. 8.

When the communication unit 10 is activated, an activation-checking communication command is sent to the distributed unit 20 having the identification number 1 at S200. When communication unit 10 is received "1" as identification number from the distributed unit 20 (S202: YES), the communication unit 10 stores the received identification number 1 as the identification number N of the active distributed unit 20 at S204.

Then at S206, the communication unit 10 communicates with the active distributed unit 20. After a lapse of a predetermined time since previously sending the activation-checking communication command (S208: YES), the activation-checking communication command is sent to the distributed unit 20 having the identification number N+1 at S210.

When the communication unit 10 is received "N+1" as the identification number from the distributed unit 20 (S212: YES), the communication unit 10 increments the identification number N of the active distributed unit 20 by 1 at S214. In short, the received identification number N+1 is stored as the identification number N of the active distributed unit 20. In this way, activation is checked in order from the distributed unit 20 having the identification number 1.

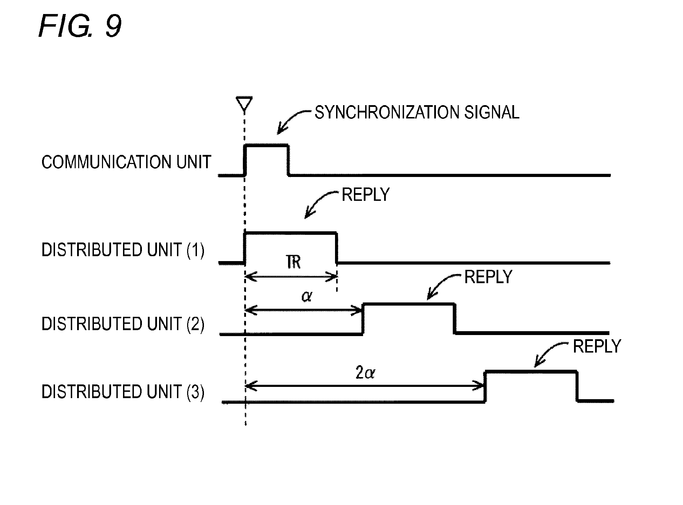

With reference to Fig. 9, a description is made on a synchronization signal (command) sent from the communication unit 10 to each distributed unit 20 and a signal (command) sent from each distributed unit 20 to the communication unit 10 on response to the synchronization signal. With reference to Fig. 9, a description is made on an example in which three distributed units 20 to which the identification numbers 1 to 3 are assigned, respectively are provided.

In this embodiment, the communication unit 10 sends the synchronization signal to all the distributed units at a predetermined time, for example, at a predetermined cycle. Each distributed unit 20, upon receiving the synchronization signal, sends back a signal indicating a detection result of the sensor 30 in a predetermined order. For example, each distributed unit 20 determines when to send back the signal, from the identification number. In this embodiment, the signal is sent back the identification number of the distributed unit 20 in ascending order. Assuming that the identification number of the distributed unit 20 is N and a predetermined constant is $\alpha$, the waiting time TW from the receiving of the synchronization signal to the sending back of the signal is calculated by the following equation;

$$TW = (N - 1) \times \alpha$$

In the above equation, for the constant $\alpha$, a time longer than the time TR required for the distributed unit 20 to send back the signal is used.

In this way, the distributed units 20 sends back the signals at different times in order; thus, the signals can be efficiently sent from the plurality of the distributed units 20 connected in parallel to each other to the communication unit 10.

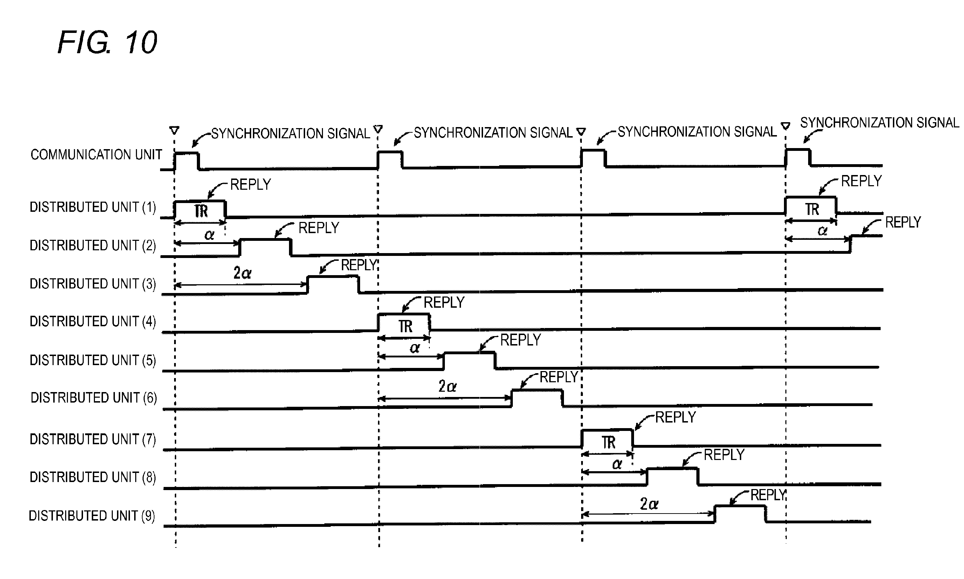

With reference to Fig. 10, a description is made on an example in which nine distributed units 20 to which the identification numbers 1 to 9 are assigned, respectively are provided.

In an example shown in Fig. 10, the communication unit 10 sends the synchronization signals to the distributed units 20 at a predetermined cycle (for example, 100 μs). For example, the communication unit 10 send the synchronization signals to the three distributed units 20 to which the identification numbers 1 to 3 are assigned, respectively, and the communication unit 10 then sends the synchronization signals to the three distributed units 20 to which the identification numbers 4 to 6 are assigned, respectively. In addition, the communication unit 10 then sends the synchronization signals to the three distributed units 20 to which the identification numbers 7 to 9 are assigned, respectively.

Accordingly, the three distributed units 20, to which the identification numbers 1 to 3 are assigned, respectively, each send back the signal in order after receiving the first synchronization signal.

The three distributed units 20, to which the identification numbers 4 to 6 are assigned, respectively, each send back the signal in order after receiving the second synchronization signal.

The three distributed units 20, to which the identification numbers 7 to 9 are assigned, respectively, each send back the signal in order after receiving the third synchronization signal.

As a result, in order to get reply signals from all the distributed units 20, the synchronization signals are sent three times per one cycle. The number of times that the synchronization signals are sent is not limited to 3 and may be changed depending on the number of the distributed units 20 and the time TR that the distributed unit 20 takes to send the signal.

Fig. 10 shows an example in which the RS-422 protocol is used for the serial communication. When the RS-485 protocol is used for the serial communication, the signal is sent back from the distributed unit 20 after the communication unit 10 completes to send the synchronization signal. That is to say, the time for sending the synchronization signal and the time for sending back the signal from the distributed unit 20 do not overlap.

As described above, in this embodiment, since the communication unit 10 and the plurality of distributed units 20 are each connected to different sensors 30, the photoelectric sensor system 1 can include an additional sensor 30 by additionally installing another distributed unit 20. The plurality of distributed units 20 are connected to the communication unit 10 in a bus type arrangement, and even when the distributed unit 20 is additionally installed, the communication between the communication unit 10 and the additionally installed distributed unit 20 can be established without the existing distributed units 20 relaying the communication. Therefore, the increase in the transmission time of a signal associated with the additional installation of the sensor 30 can be controlled.

It should be understood that the embodiments disclosed herein are illustrative and non-restrictive in every respect. The scope of the present invention is defined by the claims, rather than the description above, and is intended to include any modification within the scope and meaning equivalent to the claims.

**Claims**

1. A sensor system (1) comprising:

   a master communication device (10) connectable to a control device (2) and a plurality of sensors (30A-30F), the master communication device (10) being configured to store information received from each sensor (30A-30F) in a memory and send the stored information to the control device (2); and
   a plurality of slave communication devices (20A, 20B) connectable to a plurality of sensors (30G-30N), each of the slave communication devices (20A, 20B) configured to store information received from the respective sensors in a memory and send the stored information to the master communication device (10),
   wherein the plurality of slave communication devices (20A, 20B) are connected to the master communication device (10) in a bus type arrangement;
   wherein a sensor discrimination signal and detected information of the sensors (30G-30N) are transmitted between each slave communication device (20A, 20B) and the sensors (30G-30N);
   wherein the sensor discrimination signal and the detected information are transmitted between the master communication device (10) and each slave communication device (20A, 20B); and
   wherein the sensor discrimination signal and the detected information are transmitted between the control device (2) and the master communication device (10).

2. The sensor system (1) according to claim 1, wherein the plurality of slave communication devices (20A, 20B) are connected to the master communication device (10) by a serial transmission line.

3. The sensor system (1) according to claim 1 or 2, wherein
   the master communication device (10) and the plurality of slave communication devices (20A, 20B) are connected to the sensors (30A-30N) by a serial transmission line and a parallel transmission line.

4. The sensor system (1) according to any of claims 1 to 3, wherein
   the plurality of slave communication devices (20A, 20B) are connected to the sensors (30G-30N) at least by one of a serial transmission line and a parallel transmission line.

5. The sensor system (1) according to any of claims 1 to 4, wherein
   the master communication device (10) comprises a checking section configured to periodically check whether the slave communication device (20A, 20B) is activated, and configured to communicate with the slave communication device (20A, 20B) which is activated.

6. The sensor system (1) according to claim 5, wherein the checking section comprises:

   a transmission section configured to send an activation-checking communication command to the slave communication device (20A, 20B);
   a storing section configured to store an identification of the slave communication devices (20A, 20B) which are activated; and
   a periodical-check section configured to periodically send the activation-checking communication command.

7. The sensor system (1) according to claim 1, wherein each of the plurality of slave communication devices (20A, 20B) comprises a signal sending section configured to, upon receiving a command from the master communication device (10), send a signal to the master communication device (10) in an order previously registered at the slave communication device (20A, 20B).

8. The sensor system (1) according to claim 7, wherein the master communication device (10) comprises a synchronization signal sending section configured to send a synchronization signal to the plurality of slave communication devices (20A, 20B).

9. The sensor system (1) according to claim 7 or 8, wherein the signal sending section is configured to send the signal to the master communication device (10) after a lapse of a waiting time calculated based on the order previously registered at the slave communication device (20A, 20B).

10. A communication device (10) connectable to a control device (2) and a plurality of sensors (30A-30F), the communication device (10) storing information received from each sensor (30A-30F) in a memory and sending the information stored in the memory to the control device (2), the communication device (10) comprising:

a first communication unit configured to communicate with the sensors (30A-30F);
a second communication unit configured to communicate with the control device (2); and
a third communication unit configured to communicate with a plurality of slave communication units (20A, 20B), the plurality of slave communication units (20A, 20B) physically and electrically connectable to a plurality of sensors which are different from the sensors connected to the communication device (10), each of the slave communication units (20A, 20B) storing information received from each sensor (30G-30N) in a memory and sending the information stored in the memory to the communication device (10), and being connected to the communication device (10) in a bus type arrangement.

# FIG. 1

*FIG. 2*

*FIG. 3*

FIG. 4

*FIG. 5*

FIG. 6

## FIG. 7

*FIG. 8*

```
        ┌─────────────┐
        │    START    │
        └─────────────┘
               │
               ▼
┌──────────────────────────────────┐
│ SEND ACTIVATION-CHECKING         │── S200
│ COMMUNICATION COMMAND TO         │
│ DISTRIBUTED UNIT HAVING          │
│ IDENTIFICATION NUMBER 1          │
└──────────────────────────────────┘
               │
               ▼
      ⬡ RECIVE IDENTIFICATION NUMBER? ⬡── S202
               │                    NO ──┐
            YES│                          │
               ▼                          │
      ┌──────────────────┐                │
      │     N = 1        │── S204         │
      └──────────────────┘                │
               │                          │
               ▼◄─────────────────────────┘
      ┌──────────────────┐
      │ COMMUNICATE WITH │── S206
      │ ACTIVE           │
      │ DISTRIBUTED UNIT │
      └──────────────────┘
               │
               ▼
      ⬡ ELAPSE A PREDETERMINED PERIOD ? ⬡── S208
      NO ─┐              │
          │           YES│
          │              ▼
          │  ┌──────────────────────────────┐
          │  │ SEND ACTIVATION-CHECKING     │── S210
          │  │ COMMUNICATION COMMAND TO     │
          │  │ DISTRIBUTED UNIT HAVING      │
          │  │ IDENTIFICATION NUMBER N+1    │
          │  └──────────────────────────────┘
          │              │
          │              ▼
          │  ⬡ RECEIVE THE IDENTIFICATION NUMBER? ⬡── S212
          │  NO ─┐         │
          │      │      YES│
          │      │         ▼
          │      │  ┌──────────────────┐
          │      │  │  INCREMENT N     │── S214
          │      │  └──────────────────┘
          │      │         │
          └──────┴─────────┘
```

## FIG. 9

SYNCHRONIZATION SIGNAL

COMMUNICATION UNIT

REPLY

DISTRIBUTED UNIT (1)

TR

$\alpha$

REPLY

DISTRIBUTED UNIT (2)

REPLY

$2\alpha$

DISTRIBUTED UNIT (3)

17

EP 2 725 748 A2

## FIG. 10

**EP 2 725 748 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4294985 B

- JP 3852067 B